# EUROPEAN PATENT APPLICATION

(11) **EP 1 986 391 A1**
(43) Date of publication of application: **29.10.2008**
(21) Application number: 07290501.1
(22) Date of filing: 23.04.2007
(51) Int. Cl.: H04L 29/06, H04L 12/22

(54) **Detecting anomalies in signalling flows**

(71) Applicant: MITSUBISHI ELECTRIC CORPORATION, Chiyoda-ku Tokyo 100-8310 (JP); Mitsubishi Electric Information Technology Centre Europe B.V., 1119 NS Schiphol Rijk Amsterdam (NL)
(72) Inventor: Bouzida, Yacine, 35200 Rennes (FR)
(74) Representative: Cabinet Plasseraud

(57) **Abstract**

The present invention relates to a method of detecting anomalies in signaling flows in a communication device connected to a database. In accordance with the method, a communication device receives (301) labeled learning signaling flows and feeds these flows to the database, the signaling flows being labeled to either normal signaling flows or to different signaling flows indicative of attacks. Then a profile specific classification model is built (307) by using the learning signaling flows contained in the database, the profile being a model that characterizes a signaling flow that corresponds to either a packet, transaction or dialog. Next the learning signaling flows are classified (309), the signaling flows being classified to either normal signaling flows or to different signaling flows indicative of attacks, the classification being based on the classification model. Then a new signaling flow is received (317) and at least one attribute is extracted from the received signaling flow, and by using the at least one extracted (319) attribute for the received signaling flow is classified either to a normal signaling flow or to a signaling flow indicative of an attack, the classification being based on the classification model.

## Description

### TECHNICAL FIELD

The present invention relates to a method of detecting anomalies in signaling flows in a communication network. More specifically the invention relates to a method of detecting whether a communication device is under an attack. The invention equally relates to such a communication device and to a computer program arranged to implement the method.

### BACKGROUND OF THE INVENTION

Intrusion detection systems (IDSs) are widely used in commercial and governmental information systems. The different IDSs focused on either pattern matching techniques or on some entity behavior learning. Pattern matching techniques try to recognize patterns in the packet header or in the payload. Methods based on the entity behavior learning use some classification techniques that consider statistical measures. In their initial form, these measures consisted of monitoring the traffic to a protected resource or the traffic from a particular internet protocol (IP) address. However, little intrusion detection work is done for voice over internet protocol (VoIP) systems. The research work done in this field uses the same methods implemented for the transmission control protocol/internet protocol (TCP/IP) traffic.

Regarding the pattern matching method, a publication entitled "SCIDIVE: A Stateful and Cross Protocol Intrusion Detection Architecture for Voice-over-IP Environments", Wu et al., Purdue University discloses a method that is based on a simplistic correlation engine between the events of the signaling and the media stream protocol to detect a few types of attacks. This method is further based on two abstractions for VolP IDS; a cross protocol detection and a stateful detection. The latter involves assembling the different packets belonging to the same session and sending the result to a rule matching engine. The cross protocol detection focuses on the functionality of matching rules that span multiple protocols; e.g. detecting an anomaly in the session initiation protocol (SIP) and another in real-time transport protocol (RTP).

Regarding the methods based on classification techniques that consider statistical measures, a publication entitled "Intrusion detection mechanisms for VoIP applications" by Festor et al., LORIA-INRIA Lorraine France discloses a method based on an already published work using a Bayesian model called TCP EBayes. Therefore, instead of using the number of open TCP connections, the number of unique IP addresses and the number of unique ports as in TCP EBayes to detect port scanning and IP sweeping, the number of open RTP ports, the maximum number of waiting dialogs, etc. are used. A dialog is a peer-to-peer SIP relationship between two user agents that exists for some time. The dialog facilitates sequencing of messages and proper routing of requests between the user agents. The INVITE method is the only way defined in Request for Comments (RFC) 3261 to establish a dialog.

However, there are some disadvantages related to this method. As an example, only bursts of traffic are considered as anomaly evidence. Therefore, only the flooding attacks may be detected. In addition to this, the system was not experimented for the VoIP network case because of a lack of a real test bed. The original goal of the TCP EBayes is to detect abnormality; i.e. the detection is binary. This is not a good method in particular for overlay networks applications where the administrator or the operator should be informed about the type of attacks for the next stage that involves launching an appropriate counter measure.

SIP is widely used in VoIP systems and there are numerous attacks that can be performed against the SIP signaling protocol. The attacks are ranging from syntactical attacks; those attacks that do not follow the SIP grammar provided by RFC 3261, to different denial of service (DoS) attacks in the overlay networks. Other attacks are the same as those that exploit known flaws such as buffer-overflows against servers. Only the attacks that affect directly the signaling protocol are investigated since the syntactical attacks and different flaws that are due to the programming errors have been widely investigated and current IDSs detect a variety of these attacks. In the following, different attack types corresponding to SIP attack scenario are discussed. These attacks can be divided into three categories namely; information gathering, service theft and DoS.

Generally, an attacker has to perform many actions in order to achieve his malicious goal. These actions correspond to an attack scenario composed of many elementary attacks. Information gathering is a type of attack, where the attacker may first collect information about the target server to get its version to check whether there is any known vulnerability to exploit. The attacker may also seek for some security credential variable variations such as nonce variation where the second step of this attack scenario might be a replay attack. Password guessing and directory scanning correspond to other information gathering attack types. For instance, the directory scanning attack, which involves checking for existing valid user identities in the registrar database, may be followed by a password guessing attack since a valid username was found.

According to RFC 3261, SIP provides a stateless challenge based mechanism for authentication brought from hypertext transfer protocol (HTTP) authentication provided by RFC 2617. The "Digest" authentication is introduced into SIP for message authentication and replay protection only and without considering message integrity or confidentiality. One credential variable of this mechanism is the "nonce" that is used to compute the hash value of the authenticated response message using for instance the MD5 hash algorithm. To check whether replay attacks are possible, the attacker may check if the nonce is changed for every authenticated message or it is renewed periodically, for instance once every second. If the nonce is changed periodically, replay attacks remain possible.

To perform a replay attack, the attacker may send many requests during a short period of time say for example one second. The attacker tries to find out the randomness of the nonce value by sending a burst of REGISTER requests to the target server, for instance 20 REGISTER requests per second, and checking the values of the nonce in the server messages corresponding to the WWW-Authenticate header field. This attack may be also performed using other request methods such as INVITE, etc. This attack is also possible against a proxy where the authentication challenge is extracted from the Proxy-Authenticate header field.

Directory scanning consists in collecting valid identities corresponding to legitimate clients in the operator databases. It may be performed using different SIP message flows. It is considered as information gathering since the attacker only tries to find valid uniform resource identifiers (URIs) for a further malicious intention. Directory scanning may be considered as a step that precedes another elementary attack such as identity theft by using a dictionary to guess the corresponding password of the identity that was discovered during the directory scanning. This attack may be omitted particularly for those identities that are on the red list. In fact, the corresponding operators may add appropriate mechanisms for such lists. However, this attack is tested against many platforms of different operators and the experiments are successful.

While the above mentioned attack involves collecting information about users and servers, identity and service theft attacks involve stealing the identity of a legitimate user that either has mistakenly left his password unprotected for different reasons or an attacker has intentionally cracked his password by using some attacks such as those based on dictionary or using a brute force technique. Another type of identity and service theft kind of attacks involves using a service to which the user is not authorized or to which he is not subscribed.

Password guessing uses a dictionary to find out a user password or a brute force technique by exploring a large number of possibilities. Therefore, an attacker may use a series of passwords for a specific identity, discovered during the identity theft. The attacker may succeed to discover the correct password of this entity in particular when the corresponding user has not chosen an appropriate password.

The DoS attack is a technique that is largely used since the introduction of computers. It involves rendering a logical or a physical resource unavailable to its legitimate users. This kind of attack can be divided into two categories. The first one is based on the flooding DoS whereas the second one involves sending a malformed packet that causes the endpoint to crash.

When performing the DoS attack, an attacker can send a huge number of successive REGISTER requests against a registrar or many INVITE requests to a target client. On the other hand, an attacker may follow the dialog when sending the INVITE to a legitimate client and can stop the flow of the SIP signaling by sending a BYE request just after he receives the OK response from the target client.

DoS attack against a server is a flooding attack that involves sending a non restrictive number of requests against a server such as a registrar. This type of attack may be also extended to a distributed DoS (DDoS) attack where the attacker recruits many zombies over the Internet and each compromised machine sends huge numbers of such legitimate requests.

When performing a DoS attack against a legitimate client, an attacker tries to disturb a legitimate client based on continuous INVITE requests without establishing the call since the attacker cancels the call each time the user answers to the request.

Since the different intrusion detection techniques that are implemented until now are not appropriate to detect the different attacks targeting the current VolP systems, a novel technique needs to be introduced that can effectively detect signaling anomalies also in VolP networks.

### SUMMARY OF THE INVENTION

According to a first aspect of the invention there is thus proposed a method of detecting anomalies in signaling flows as recited in claim 1.

There is a variety of advantages offered by the proposed method. First, it detects the whole a priori known attacks by an automatic learning. Second, it easily discriminates the different attacks and the safe VoIP traffic. Third, it recognizes new anomalies; those that are not learnt during the phase of building the classification model since in real life we are not aware of all existing attacks because new vulnerabilities are discovered and potential attackers use these vulnerabilities in different manners to attack information systems.

In addition to this, this method is a complete one since it does not only detect attacks but also focuses on the pertinent VolP attributes that should be considered in order to achieve the goal of detecting attacks. Another objective of this method is that it does not only use a stateful detection technique but also looks at different protocols used for establishing and maintaining the VolP communications.

Moreover, it generates statistical measures between the current packet (or equally current transaction or dialog) and the last packets (or equally transactions or dialogs) for the goal of VoIP intrusion detection.

Finally, it is an extensible method because it learns the different classes of traffic (normal or attack) and adaptively considers new attacks and new normal forms by simple updates. It is also insensitive to IP spoofing and can handle client mobility. This method can be used as a first step before launching counter measures once it has detected an attack. Once it has detected an attack it sends to the corresponding reaction mechanism the different features that characterize the traffic that has caused the intrusion so that appropriate counter measures can be taken.

According to a second aspect of the invention there is further provided a computer program product or a hardware device comprising instructions for implementing the method according to the first aspect, when loaded and run on computer means of a device capable of detecting anomalies in signaling flows.

According to a third aspect of the invention there is provided a communication device capable of detecting anomalies in signaling flows as recited in claim 14.

### BRIEF DESCRIPTION OF THE DRAWINGS

Other features and advantages of the invention will become apparent from the following description of non-limiting exemplary embodiments, with reference to the appended drawings, in which:
- Figure 1 is a block diagram showing an environment, where the teachings of the invention may be applied;
- Figure 2 is a block diagram of a communication device capable of detecting anomalies in signaling flows in accordance with an embodiment of the present invention;
- Figures 3A and 3B are flow charts depicting the method in accordance with an embodiment of the present invention;
- Figure 4 shows packets and illustrates how certain packets belong to a predetermined window; and
- Figure 5 shows an example of a decision tree structure in accordance with an embodiment of the present invention.

### DETAILED DESCRIPTION OF EMBODIMENTS OF THE INVENTION

Some embodiments of the invention will now be described in more detail with reference to the appended drawings. In the following description, the embodiments of the invention are described in the context of SIP signaling protocol.

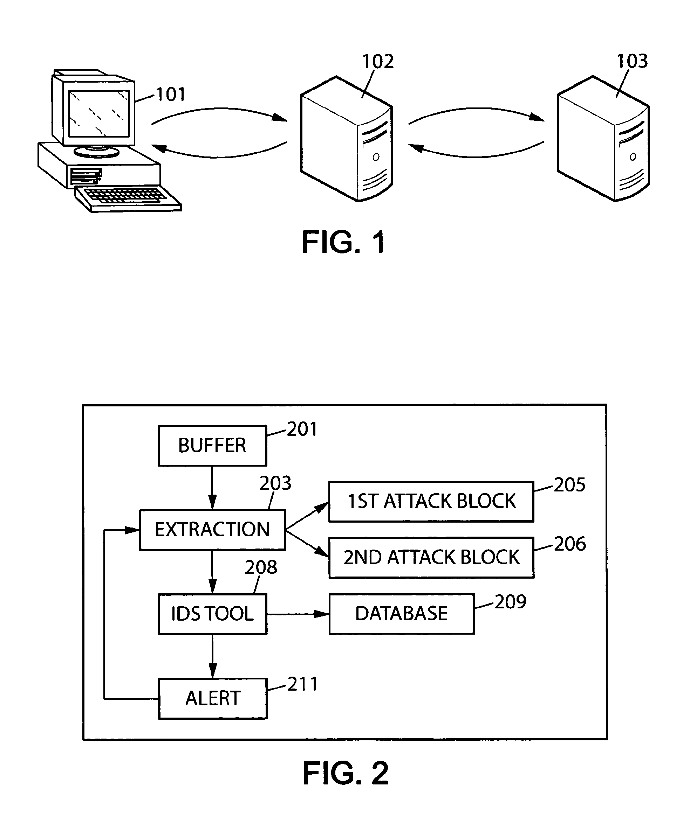

Figure 1 illustrates an environment, where the teachings of the present invention can be applied. In Figure 1 there is shown a client's device 101, which in this case is a desktop computer. It can equally be any other device through which other network elements can be accessed. In the following description the proposed intrusion detection method is implemented in a device or a logical module in front of a SIP server 103. This device is called an intrusion detection device (IDD) 102. The only condition for the IDD 102 is the ability to catch all the inbound and outbound traffic of the monitored SIP server 103. The IDD 102 may also be implemented behind or in front of a firewall with or without a network address translation (NAT) to which it is transparent. Thus in this example the IDD 102 is a physical device placed in a different location than the SIP server 103. Alternatively the IDD 102 could be implemented simply by software, and it would be physically integrated with the SIP server 103.

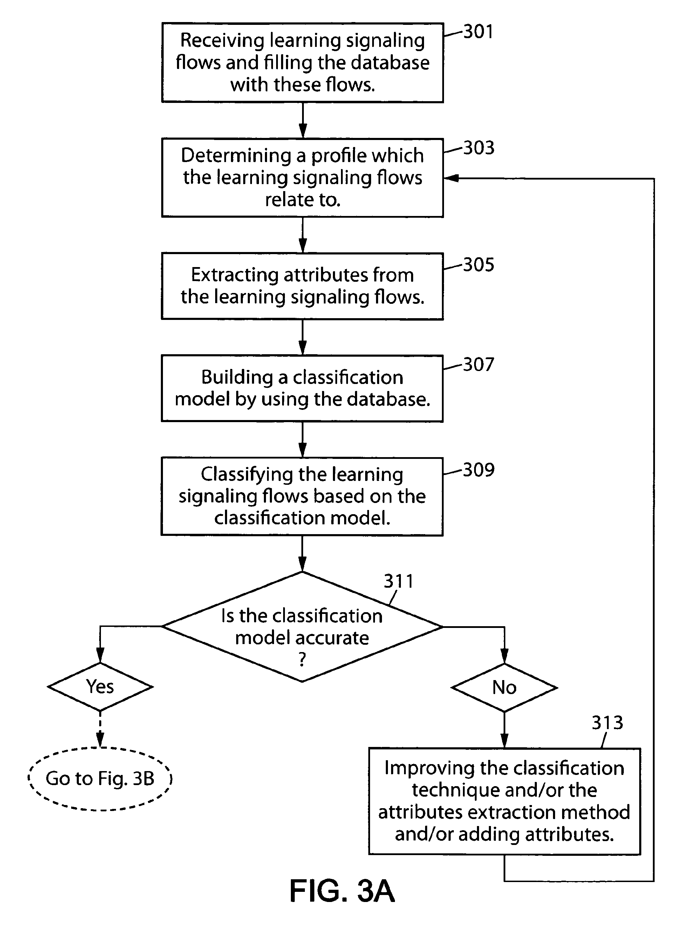

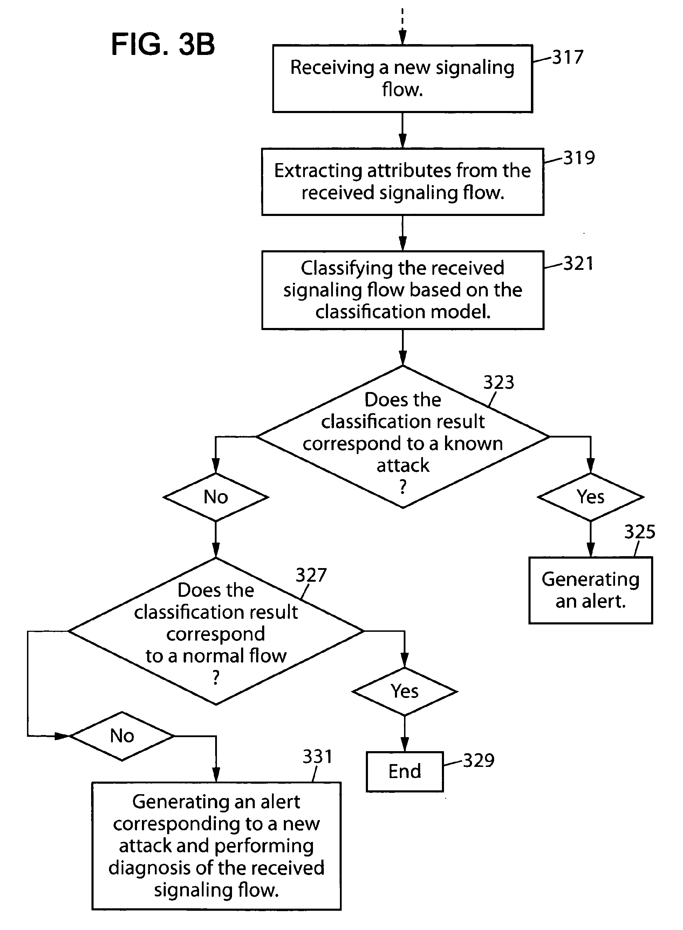

Figure 2 is a block diagram illustrating some blocks of the IDD 102 which are relevant as far as the teachings of the present invention are concerned. In Figure 2 there is shown a buffer 201 for buffering the incoming SIP signaling flows. An extraction block 203 is arranged to extract the attributes from the incoming signaling flows. For this purpose a first attack block 205 and a second attack block 206 are employed and connected to the extraction block 203. The purpose of an IDS tool 208 is to detect whether the incoming signaling flow contains anomalies, i.e. whether an attack is detected. For the purpose of implementing the method of the present invention, a database 209 is provided. The database 209 contains various labeled signaling flows for aiding the IDS tool 208 to detect the attacks. The signaling flows contained in the database 209 can also be called learning signaling flows. The purpose of the learning signaling flows will be explained later in more detail. It is to be noted that the signaling flows can be labeled so that they are considered either normal signaling flows or abnormal signaling flows, indicative of possible attacks against the SIP server 103. An alert block 211 is also provided for providing feedback to the IDS tool and to the extraction block 203. The alert block 211 may also inform the SIP server 103 about a possible attack. The operations of these blocks are explained next in more detail with reference to the flow chart of Figures 3A and 3B.

In step 301 the IDD 102 receives a bunch of learning signaling flows from the communication network where the IDD 102 is located, buffers the received learning signaling flows in the buffer 201 and feeds these learning signaling flows into the database 209. At this stage the database 209 thus contains labeled learning signaling flows. The flows are labeled so that they are either labeled as normal flows or flows indicative of different types of attacks.

Next in step 303 a profile is determined which the received signaling flows relate to. The profile corresponds to a set of attributes that in turn summarize a VoIP flow and catch the evidence of normality and abnormality. A SIP signaling profile, may it be a packet, a transaction or a dialog profile, is a model that precisely characterizes the corresponding flow (packet, transaction or dialog). This model is summarized in a set of attributes whose values are either continuous or discrete.

Three profiles are defined for the goal of characterizing VoIP traffic and catching VoIP intrusion evidence. The first profile corresponds to a set of attributes extracted from packets and the different measures that correlate the current packets with the previous packets as explained in more detail below.

The second profile is based on a transaction. A transaction consists of a request that invokes a particular method, or function, on a server and at least one response. SIP is based on an HTTP-like request/response transaction model.

The third profile is based on a dialog. A dialog is a peer-to-peer SIP relationship between two user agents that persists for some time. The dialog facilitates sequencing of messages and proper routing of requests between the user agents. The INVITE method is the only way defined in RFC 3261 to establish a dialog. The profile based on a dialog corresponds to a session based profile where not only signaling and description protocols are considered, but also the RTP and other protocols that are used for media transfer. The third profile is complementary to the cross protocol used by "SCIDIVE".

Next in step 305 at least one attribute is extracted from each learning signaling flow. In case the signaling flows contain several attributes, all these are advantageously extracted. The extraction of attributes is advantageously independent of logical source addresses (i.e. independent of "From_URI" attributes) or physical internet protocol (IP) source addresses of the signaling flows thereby making the method insensitive to client mobility and spoofing. This means that the logical or physical source addresses do not belong to the extracted attributes.

Two different kinds of attributes are defined. The first set of attributes comprises attributes as defined in RFC 3261 related to SIP. Furthermore, these attributes are extracted based on the known attack types as described earlier. These attack types are contained in the first attack block 205. The first set of attributes is extracted manually by a security expert, i.e. a human being, directly from RFC 3261, thus the attributes of the first set can be called intrinsic attributes.

The second set of attributes is automatically extracted from the first one. For this purpose the second attack block 206 is provided. This latter set corresponds to different statistical measures between the current network flow and the past flows according to a time window having a length of N or according to a window of M flows, where N is a positive value and M is a positive integer. The second set is automatically constructed from the first set by considering intrinsic statistical measures between the current flow attributes and those of last flows contained in a window of N seconds or only by considering the last M flows. The values of N and M are fixed by experience. For instance, a period of 2 seconds is used for the time window and 200 flows preceding the current one are used for the other window. The intrinsic attributes can be defined to belong to a first class, the attributes related to the time window are defined to belong to a second class and the attributes related to a window of M flows are defined to belong to a third class. Thus, the attributes of the first class belong to the first set, whereas the attributes of the second and third class belong to the second set. The attributes of the second set can equally be called expert knowledge attributes, since a security expert determines the attributes that belong to this set.

In the following, different attributes of each class are explained in more detail. It is to be noted that regarding the first and second classes, a list of attributes is given, but only corresponding to a VolP packet profile. The teachings of the invention equally apply to the other profiles by using their corresponding state machines as defined in their appropriate protocol standards, such as RFC 3261, for each protocol that is used in the communication.

The attributes of the first class correspond to different attributes that are intrinsic to the VolP protocol, particularly to SIP. Table 1 presents a non exhaustive list of attributes of this class. For each flow a timestamp corresponding to the time of its occurrence is considered to calculate the other two classes.

**Table 1: List of attributes of the first class.**

| Attribute | Meaning |
|---|---|
| Resp_Req | The value of this attribute is "REQUEST" if the considered flow is a request else it is "Response" |
| SCN | The value of the status code if it is a response (200, 180, ...) else it is set to "NULL" |
| Reason_Phrase | The reason phrase informed from the response (OK, UNAUTHORIZED, etc.) |
| Method | The value of the method informed from the request (INVITE, REGISTER, etc.) |
| From_URI | It corresponds to the logical initiator of the request informed in the from header field |
| To_URI | This attribute corresponds to the logical recipient informed in the to header field |
| From_Tag | The value of the tag parameter informed in the from header field. It is used to follow a dialog between two user agents (UAs) |
| To_Tag | The value of the tag parameter informed in the to header field. It is used to follow a dialog between two UAs |
| UserName | This corresponds to the credential value of the username parameter specified in the Authorization header field |
| Nonce | It corresponds to the credential value of the nonce parameter specified either in the Authorization header field or in the WWW-Authenticate header field |
| Response | This corresponds to the response parameter specified in the Authorization header field as a response to the challenge |

As an example, the last three attributes of Table 1 "UserName", "Nonce" and "Response" are extracted based on the two attacks; nonce variation and password guessing. Therefore, this list is an open one as long as other vulnerabilities and attacks are discovered. Using this list for each flow independently from other flows may not be an optimal solution. One solution is to find statistical characteristics using the last flows preceding the current one in the near past. This is discussed in connection with the classes two and three. It is further to be noted that the normal flow of the signaling traffic highly follows a statistical law as in the different telephony models. Therefore, attribute classes two and three highly contribute to characterizing the normal flow behavior.

The attributes of the second class are obtained by calculating correlation measures between the different signaling flows preceding the current one using the different values of the attributes indicated in the first class. Table 2 presents the different attacks of this class and their descriptions.

**Table 2: List of attributes of the second class.**

| Attribute | Meaning |
|---|---|
| - count *"same_To-URI"* | Number of flows to the same URI as the current one in the past *N* seconds |
| The following features refer to these flows with the same To-URI value during the past *N* Seconds | |
| same_method_rate | Percentage of the "count" flows that have the same method value |
| diff_meth_rate | Percentage of the "count" flows that have different methods |
| same_QS_rate | Percentage of the "count" flows that have the same Resp_Req value |
| diff_QS_rate | Percentage of the "count" flows that have different Resp_Req values |
| same_scn_rate | Percentage of the "count" flows that have the same status code value |
| diff_scn_rate | Percentage of the "count" flows that have different status code values |
| same_rp_rate | Percentage of the "count" flows that have the same reason phrase value |
| diff_rp_rate | Percentage of the "count" flows that have different reason phrase values |
| same_username_rate | Percentage of the "count" flows that have the same username value |
| diff_username_rate | Percentage of the "count" flows that have different username values |
| same_nonce_rate | Percentage of the "count" flows that have the same nonce value |
| diff_nonce_rate | Percentage of the "count" flows that have different nonce values |
| same_response_rate | Percentage of the "count" flows that have the same response value |
| diff_response_rate | Percentage of the "count" flows that have different response values |
| -method_count | Number of flows that have the same Method as the current one in the past *N* seconds |
| same_method_count | |
| The following features refer to these flows with the same Method value during the past *N* Seconds | |
| meth_same_To-URI | Percentage of the "method_count" flows that have the same To-URI value |
| meth_diff_To-URI | Percentage of the "method count" flows that have different To-URI values |
| -QS_count | Number of flows that have the same Resp_Req as the current one in the past *N* seconds |
| same_QS_count | |
| The following features refer to these flows with the same Resp_Req value during the past *N* Seconds | |
| QS _same_To-URI | Percentage of the "QS_count" flows that have the same To-URI value |
| QS _diff_To-URI | Percentage of the "QS_count" flows that have different To-URI values |
| -scn_count | Number of flows that have the same status code as the current one in the past *N* seconds |
| same_scn_count | |
| The following features refer to these flows with the same status code value during the past *N* Seconds | |
| scn _same_To-URI | Percentage of the "scn count" flows that have the same To-URI value |
| scn _diff_To-URI | Percentage of the "scn _count" flows that have different To-URI values |
| -rp_count Phrase | Number of flows that have the same Reason as the current one in the past *N* seconds |
| same_rp_count | |
| The following features refer to these flows with the same reason phrase value during the past *N* Seconds | |
| rp_same_To-URI | Percentage of the "rp_count" flows that have the same To-URI value |
| rp _diff_To-URI | Percentage of the "rp_count" flows that have different To-URI values |
| -username_count | Number of flows that have the same username as the current one in the past *N* seconds |
| same_username_count | |
| The following features refer to these flows with the same username value during the past *N* Seconds | |
| username_same_To-URI | Percentage of the "username" flows that have the same To-URI value |
| username _diff_To-URI | Percentage of the "username" flows that have different To-URI values |
| -nonce_count | Number of flows that have the same nonce as the current one in the past *N* seconds |
| same_nonce_count | |
| The following features refer to these flows with the same nonce value during the past *N* Seconds | |
| nonce _same_To-URI | Percentage of the "nonce" flows that have the same To-URI value |
| nonce _diff_To-URI | Percentage of the "nonce" flows that have different To-URI values |
| -response_count | Number of flows that have the same response as the current one in the past *N* seconds |
| same_ response_count | |
| The following features refer to these flows with the same response value during the past *N* Seconds | |
| response_same_To-URI | Percentage of the "response" flows that have the same To-URI value |
| response_diff_To-URI | Percentage of the "response" flows that have different To-URI values |

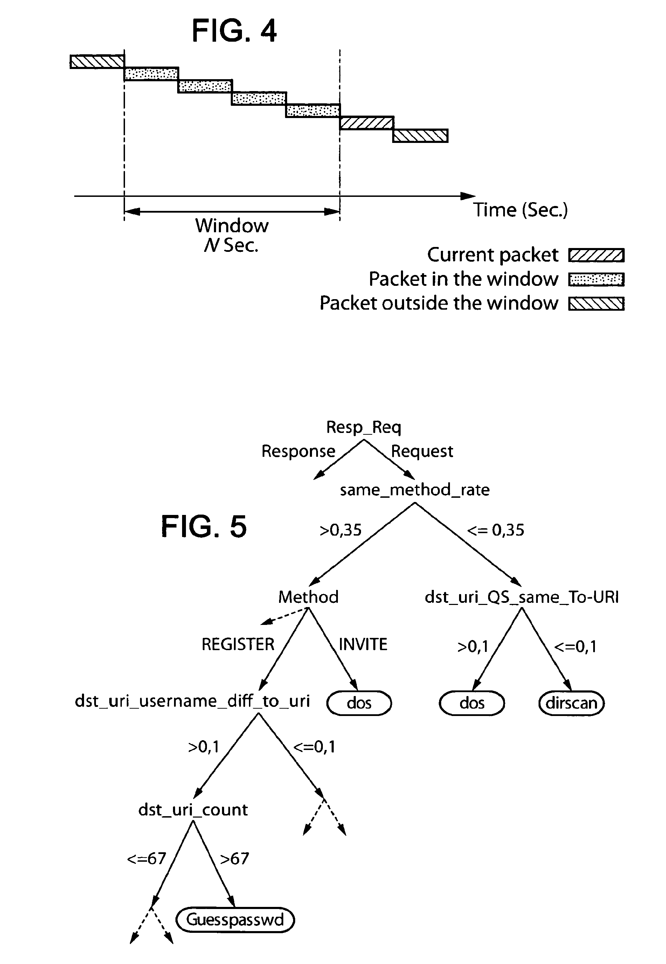

Figure 4 shows the idea used to compute the attributes of class 2. A time window of N seconds, for instance 2 seconds, is used for this purpose. These attacks are relevant for VolP DoS flooding attacks and other attacks that send the same requests with different values such as password guessing or nonce variation. The different attributes of this class are automatically constructed and are summarized into the "Same_To-URI" attributes that examine the flows in the last N seconds that have the same logical recipient as the current flow. A logical originator is not taken into account when calculating the different attributes due to URI spoofing where an attacker may forge a "From_URI". However, the provider of the service may use ingress filtering over "From_URI" header field and in this case, the logical initiator of the flow may be considered.

A novice attacker may send many requests in a short time window. The attributes of the second class are sufficient to detect the corresponding attack. However, other attackers will take time and use stealthy techniques to bypass this approach. Therefore, a larger time window to detect these attacks is needed. For this reason, the third class of attributes is introduced that considers the last M flows, for instance M = 200, preceding the current flow to calculate the same attributes as those in Table 2. The attributes of this class are calculated according to the last M flows preceding the current one. Therefore, these attributes are not reported in this context. It is to be noted that in Figure 5, "dst_uri_XXX" attributes correspond to the third class attributes. As for example, "dst_uri_count" corresponds to the number of flows to the same URI as that of the current flow during the past *M* flows.

Once the attributes are extracted, the IDS tool 208 is provided with the attributes that characterize the VoIP signaling flows. In general, this tool has two steps. First in step 307 the IDS tool 208 builds a classification model by using the labeled learning signaling flows contained in the database 209.

Since the different attributes are defined to characterize and distinguish between VoIP signaling flows, a mechanism needs to be found so that the database 209 is used to construct a model so that all the labeled learning signaling flows that are present in the database 209 may be summarized by this model for the goal of their appropriate classification. An expert may write for example rules to characterize each labeled flow. However, this solution is unrealistic for many reasons. First, there are many attributes for each flow. Second, each category, i.e. an attack or a normal flow, has many occurrences in the database 209. Therefore, a human cannot write such rules particularly when dealing with learning datasets with sizes of gigabytes.

Therefore, in accordance with the present invention, this problem is solved by using data mining approaches that automatically build models so that different flows become distinguishable. There are many supervised techniques that can learn from labeled databases, such as the database 209, and then classify new instances. By instance it is understood an example of a profile, may it be a packet, transaction or dialog, where each attribute is instantiated with a value. Thus each profile sniffed from the communication network is an instance. Examples of these kinds of techniques are neural networks, *K* nearest neighbors (*K* being a positive integer), Bayesian networks, naive Bayes trees, decision trees, etc. Due to the expressiveness of the model that is built from decision trees, this technique will be described later in detail and different results that are obtained from the concluded experiments are given.

In this description, a detection technique is called a method that learns automatically the different samples, i.e. the labeled learning signaling flows, present in the database 209 and as a result of the learning step a classification model is built so that new unlabeled signaling flows can be classified in their appropriate categories, i.e. attacks or normal flows. If the corresponding class is an attack then an alert is generated as explained later, otherwise the flow is considered as normal.

Then in step 309, the different labeled signaling flows contained in the database 209 are classified to their appropriate classes. The classification is based on the classification model built in step 307.

Once the classification model, also called a classifier, is built during the learning step and after the learning signaling flows are classified, the classification model is tested in step 311 against the labeled signaling flows contained in the database 209 to evaluate the accuracy of the classification model. The accuracy is based on the number of examples of flows that are correctly classified. In other words if there is an attack and there are no alerts (false negatives), there are no attacks and there is at least one alert (false positives), or a flow that corresponds to a specific attack type that is classified in another attack class, e.g. a password guessing attack that is classified as a DoS; then it can be concluded that there is a mismatch between the classified models of database 209 and labeled models of the database 209. Therefore, to know whether the classifier is accurate it is sufficient to compare the results of the classification and the labeled signaling flows contained in the database 209.

If the classification model is considered not be sufficiently accurate, i.e. the successful detection ratio is too low, then in step 313 a backward tuning is performed. Three solutions are possible. The first involves improving the classification technique by tuning the different parameters of these techniques or by introducing new classification techniques. The other solution involves extending the list of the attributes. The extension is useful because it is possible that the considered attributes do not sufficiently keep all the original information that characterizes the profile. This situation is possible because some information could be lost after transforming the original flows into a profile summarized by a set of attributes presented above, rendering the different classes indistinguishable. Using a meticulous choice, the expert may find other attributes that can differentiate the different kinds of flows. It is to be noted that an automatic extraction without expert knowledge of the attributes is a challenge in the field of intrusion detection. A third solution involves combining the two solutions until a stable, high successful detection ratio has been found. This step is repeated until the detection ratio converges to an acceptable value, in general 99.99%. Once the backward tuning has been done, the procedure continues in step 303.

If the classification model is accurate, then the procedure continues in step 317. In step 317 a new signaling flow is received. Then in step 319 attributes are extracted from the received signaling flow. This extraction is done as explained above in relation to step 305. Again the logical or physical source addresses of the received signaling flow do not belong to the extracted attributes.

Once the attributes are extracted, the received signaling flow is classified in step 321 based on the classification model built earlier in step 307.

Then in step 323 it is determined whether the classification result corresponds to a known attack. If this is the case, then in step 325 an alert is generated. This model generates an alert when suspicion (attack) is detected. Since these are elementary attacks a manager of the communication network is informed, i.e. alerted, or the manager receives this alert. In intrusion detection platforms, the manager may be a security site officer (SSO). However, if thousands of alerts are generated in a second then this manager may be a process that gathers these alerts for further investigations by for instance constructing attack scenarios or aggregating them and then sending them to the SSO.

On the other hand if the classification result does not correspond to a known attack, then in step 327 it is determined whether the classification result corresponds to a normal signaling flow. If this is the case, then the procedure comes to its end in step 329. However, if the classification result does not correspond to a normal flow, then in step 331 an alert is again generated and a diagnosis is performed to detect a new type of attack. Once a new type of attack is detected, the database 209 can be updated so that this new type of attack is included in it. The database updating is also recommended when a new normal flow is detected in order to not classify it again as a new flow but as a known normal flow.

Since the database 209 is used in which all flows are labeled in their appropriate classes, different supervised classification techniques for the task of building the classification model may be used. There are many candidate techniques available in the data mining literature. In the following, an example of decision trees induction algorithm as a technique for learning labeled flows and classifying new ones for the detection goal is explained in more detail.

However, any other supervised or unsupervised technique may be used for this goal. This means that any supervised technique in addition to the decision trees may be used for the task of classification (or detection). There is a difference between supervised and unsupervised methods. The supervised classification technique, such as the decision trees, uses a database in which the different instances are labeled. Using this labeled database, a model is built, i.e. a set of rules (signatures) in the case of decision trees. This classification model should successfully generalize beyond observed data, i.e. the labeled signaling flows.

The effectiveness of a classification model corresponds to its classification accuracy on the training data set that is used to build the classifier and its generalization accuracy over new unseen data sets.

The unsupervised learning is not discussed here, but this mechanism may also be used with unsupervised methods that do not use a learning database since only the relationships between all the instances are checked (not labeled in this case) according to some hypotheses. Therefore, it is possible to differentiate only between these instances with a binary classification (attack or not attack). The main problem of this technique is the hypotheses taken a priori which are not always realistic in real life.

Decision trees classifiers are based on the "divide and conquer" strategy to construct an appropriate tree from a given learning set S containing a finite and not empty set of labeled instances. The decision tree is constructed during the learning step, and it is then used to predict the classes of new instances. Most current decision trees algorithms use a "top down strategy", i.e. from the root to the leaves. Two main processes are necessary to use the decision tree, namely a building process and a classification process.

The building process involves building the tree by using the labeled training data set, i.e. the labeled signaling flows. An attribute is selected for each node based on how it is more informative than others. Leaves are also assigned to their corresponding classes during this process.

To measure how informative a node is, Shanon entropy is used to construct the decision tree. This partitioning strategy is used to build the tree, having as a main goal to divide the considered training example by selecting recursively the best non categorical attribute.

In case of a discrete valued attribute; such as the "Method" attribute in the first class, this strategy tests all possible values of the attribute under consideration. However, in the case of continuous valued attributes; such as those of the second and the last classes, a transformation technique is introduced. It involves defining new discrete valued attributes that partition the continuous attribute into a discrete set of intervals. The algorithm dynamically creates a new Boolean attribute *A*ₜ that is true if *A<t* and false otherwise. The selection of the threshold value *t* is based on the information gain. A threshold *t* is selected if it produces the greatest information gain. The different items according to the continuous attribute A are sorted, then a set of candidate thresholds midway between the corresponding values of A is generated. These candidate thresholds are evaluated by computing the information gain associated with each of them. The dynamically created Boolean attributes can then compete with the other discrete valued candidate attributes that are available for growing the tree. In the following, this partitioning technique is used for evaluating the attributes with continuous values.

A decision tree is important not because it summarizes what is already known, i.e. the training set (in this case the labeled learning signaling flows), but because it will help to classify correctly new instances. Thus, when building classification models one should have both training data used for building the model and test data to verify how well it actually works. New instances are classified by traversing the tree from top to down based on their attribute values and the node values until one leaf is reached that corresponds to the class of the new instance.

Besides the building and classification steps, many decision trees algorithms use another optional step. This step involves removing some edges that are considered useless for improving the performance of the tree in the classification step. Pruning trees simplifies the tree since many useless edges are removed rendering complex trees more comprehensive for interpretation. In addition, a tree that is already built is pruned only when it gives better classification results than before pruning.

The building process is usually done off-line while the detection process may be performed either on-line or off-line depending on the security policy of the information system.

Next some examples of some branches of the tree constructed from the learning data set are illustrated with reference to Figure 5.

Figure 5 shows a portion of the decision tree constructed from the different experiments on real SIP servers. The tree is constructed from the attacks that are played in a real network with a real VoIP infrastructure with different registrars, proxies and clients (hard-phones and soft-phones). The tree presented in Figure 5 gives four signatures, i.e. set of attributes, of three attacks; namely directory scanning, DoS based on flooding and password guessing. As an example of a signature, let us traverse the tree from the root to the attack corresponding to "guesspassword". The resulted rule is:

```
        IF (Resp_Req = REQUEST) AND (same_method_rate ≥ 0.35) AND
 (method = REGISTER) AND (dst_uri_username_diff_To-uri > 0.1) AND
 (dst_uri_count > 67) THEN attack_class = "guesspassword".
```

Following the same steps, all the different attacks are assigned with their appropriate rules that are extracted automatically from the decision tree that is built during the learning step. One of the conditions that should be followed is that the learning step must be general; i.e. it should contain a maximum of examples illustrating the different forms of each known attack and a maximum number of occurrences of normal flow behaviors. If the database 209 is exhaustive enough then the different attacks would have a precise signature that is automatically generated from the learning step and there would be less false positives and less false negatives.

After the learning process, the tree containing the different signatures of the different known attacks is automatically extracted. For an effective use of these signatures, rules are extracted from the tree by using a pruning technique. First, each attribute test along the path from the root to the leaf becomes a rule antecedent and the classification at the leaf becomes the rule consequence. To illustrate the rule pruning let us consider the following rule generated from the above tree:

```
        IF (Resp_Req = REQUEST) AND (same_method_rate > 0.35) AND
 
 (method = INVITE) THEN attack_class = DoS
```

Then each such rule is pruned by removing any antecedent of which removal does not worsen its estimated accuracy. In the case of the above rule, rule pruning would consider removing the antecedents (Resp_Req = Request), (same_method_rate > 0.35) and (method = INVITE). It would select the first antecedent as a first pruning step then consider the estimated rule accuracy after this removal to check whether this step does not decrease the estimation accuracy. Then it would consider the second precondition as a further pruning step and so on. It is to be noted that no pruning step is performed if it reduces the estimated rule accuracy. As a result of the pruning, the detection model corresponds to a set of rules analyzed sequentially. Table 3 gives an example of such rules constructed using the traffic generated from the different attacks cited above.

**Table 3: Detection using the pruned rules.**

| Rules | Meaning |
|---|---|
| Resp_Resp = Request, dst_URI_QS_same_ To-URI > 0.1 → attack DoS | If the corresponding flow is a request and the value of the attribute dst_URI_QS_same_To-URI is greater than 0.1 then this flow correspond to a DoS attack |
| Resp_Resp = Request, dst_URI_count > 67, dst_uri_username_diff _To-uri > 0.1 → attack password guessing | If the corresponding flow is a request and the number of flows to the same URI as the current one during the last two seconds is greater than 67 and dst_uri_username_diff_To-uri value is greater than 0.1 then this flow is a guess password attack. |
| . | . |
| . | . |
| . | . |
| default: new | If none of the above rules matches then the current flow corresponds to a new attack and diagnosis should be performed. |

According to Table 3, each time a new flow is received, it is analyzed according to the different attributes that characterize it using the different rules. In the case where none of the rules matches then it is considered as a new flow corresponding momentarily to a new attack. However, a diagnosis is recommended to assess the corresponding flow and determine its appropriate class (safe or corresponds to a new attack). This mechanism can be programmed. However, a hardware implementation using a ternary content-addressable memory (TCAM) is possible for the rules matching procedure.

The invention equally relates to a computer program product that is able to implement any of the method steps of the embodiments of the invention when loaded and run on computer means of the IDD 102.

The invention equally relates to the IDD 102 that is arranged to implement the method steps described above. The computer program can be arranged to be run by the IDD 102.

While the invention has been illustrated and described in detail in the drawings and foregoing description, such illustration and description are to be considered illustrative or exemplary and not restrictive; the invention is not restricted to the disclosed embodiments.

Other variations to the disclosed embodiments can be understood and effected by those skilled in the art in practicing the claimed invention, from a study of the drawings, the disclosure and the appended claims. For instance it should be noted that the method described with reference to Figures 3A and 3B should be performed for each type of profile separately. In the claims, the word "comprising" does not exclude other elements or steps, and the indefinite article "a" or "an" does not exclude a plurality. A single processor or other unit may fulfill the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. A method of detecting anomalies in signaling flows in a communication device (102) connected to a database (209), the method comprises the following steps performed by the communication device (102):
- receiving (301) labeled learning signaling flows and feeding these flows to the database (209), the signaling flows being labeled either to normal signaling flows or to different signaling flows indicative of attacks;
- building (307) a profile specific classification model by using the learning signaling flows contained in the database (209), the profile being a model that characterizes a signaling flow that corresponds to either a packet, transaction or dialog;
- classifying (309) the learning signaling flows, the signaling flows being classified either to normal signaling flows or to different signaling flows indicative of attacks, the classification being based on the classification model;
- receiving (317) a new signaling flow;
- extracting (319) from the received signaling flow at least one attribute characterizing the received signaling flow; and
- using (321) the at least one extracted attribute for classifying the received signaling flow either to a normal signaling flow or to a signaling flow indicative of an attack, the classification being based on the classification model.

2. The method according to claim 1, wherein the method further comprises extracting (305) attributes from the learning signaling flows and using the extracted attributes together with the learning signaling flows for building the classification model.

3. The method according to claim 1 or 2, wherein logical or physical source addresses of the learning signaling flows or the new signaling flow do not belong to the extracted attributes.

4. The method according to claim 1, wherein the method further comprises extracting (305) intrinsic attributes from a protocol standard related to the learning signaling flows and extracting knowledge based attributes from known attacks comprised in the learning signaling flows for the purpose of building the classification model.

5. The method according to any of the preceding claims, wherein the method further comprises determining (311) the accuracy of the classification model by comparing the labeled values of the learning signaling flows and the corresponding values of the signaling flows classified by using the classification model.

6. The method according to claim 5 when depending on claim 2, wherein the method further comprises improving (313) the extraction of attributes and/or the classification step in case the classification model is determined to be inaccurate.

7. The method according to claim 5, wherein the method further comprises improving (313) the classification step in case the classification model is determined to be inaccurate.

8. The method according to any of the preceding claims, wherein the method further comprises generating (325) an alert in case the received new signaling flow is classified as corresponding to a known attack type.

9. The method according to any of the preceding claims, wherein the method further comprises generating (331) an alert and performing a diagnosis of the received new signaling flow in case the received signal is classified as not corresponding to a known attack type and not corresponding to a normal signaling flow.

10. The method according to claim 9, wherein the method comprises based on the diagnosis, adding a new learning signaling flow into the database (209), the new learning signaling flow being indicative of a new attack type or a normal signaling flow.

11. The method according to any one of claims 1 or 2, wherein the extracting comprises a first extraction step and a second extraction step, wherein the second extraction step comprises automatically extracting a second set of attributes based on the results of the first extraction step and obtaining the second set of attributes based on correlation measures between the received new signaling flow and signaling flows preceding the received new signaling flow.

12. The method according to any of the preceding claims, wherein the classification model is built based on data mining approach and the data mining is based on at least one of the following techniques: neural networks, *K* nearest neighbors, *K* being a positive integer, Bayesian networks, naïve Bayes trees, decision trees.

13. A computer program product comprising instructions for implementing the steps of a method according to any one of claims 1-12 when loaded and run on computer means of the communication device (102).

14. A device (102) for detecting anomalies in signaling flows, the device (102) being connected to a database (209), the device (102) comprises:
- a receiver for receiving labeled learning signaling flows and for feeding these flows to the database (209), the signaling flows being labeled either to normal signaling flows or to different signaling flows indicative of attacks, the receiver being further arranged to receive a new signaling flow;
- means (208) for building a profile specific classification model by using the learning signaling flows contained in the database (209), the profile being a model that characterizes a signaling flow;
- means (208) for classifying the learning signaling flows, the signaling flows being classified either to normal signaling flows or to different signaling flows indicative of attacks, the classification being based on the classification model, the means (208) for classifying being further arranged to, by using at least one extracted attribute, for classifying the new received signaling flow either to a normal signaling flow or to a signaling flow indicative of an attack, the classification being based on the classification model; and
- means (203) for extracting at least one attribute characterizing the new received signaling flow from the received signaling flow.

15. The device (102) according to claim 14, wherein the means (208) for classifying is further arranged to classify a new signaling flow as a signaling flow indicative of a new attack, in case the new signaling flow is not considered as being indicative of a known attack or a normal signaling flow.

16. The device (102) according to any one of claims 14 or 15, wherein the device (102) further comprises means (208) for diagnosing the new signaling flow if it is not considered as indicative of a known attack or indicative of normal traffic.

17. The device according to any one of claims 14-16, wherein the device (102) further comprises means (208) for re-injecting the new signaling flow, classified as being indicative of a new attack or a new normal signaling flow after being diagnosed, into the database (209) for updating the classification model.

## Amended claims

### Amended claims in accordance with Rule 137(2) EPC.

**1.** A method of detecting anomalies in signaling flows in a communication device (102) connected to a database (209), the method being **characterized by** the following steps performed by the communication device (102):
- receiving (301) labeled learning signaling flows and feeding these flows to the database (209), the signaling flows being labeled either to normal signaling flows or to different signaling flows indicative of attacks;
- building (307) a profile specific classification model by using the learning signaling flows contained in the database (209), the profile being a model that characterizes a signaling flow that corresponds to either a packet, transaction or dialog;
- classifying (309) the learning signaling flows, the signaling flows being classified either to normal signaling flows or to different signaling flows indicative of attacks, the classification being based on the classification model;
- receiving (317) a new signaling flow;
- extracting (319) from the received signaling flow at least one attribute characterizing the received signaling flow; and
- using (321) the at least one extracted attribute for classifying the received signaling flow either to a normal signaling flow or to a signaling flow indicative of an attack, the classification being based on the classification model.

**2.** The method according to claim 1, wherein the method further comprises extracting (305) attributes from the learning signaling flows and using the extracted attributes together with the learning signaling flows for building the classification mode. not corresponding to a known attack type and not corresponding to a normal signaling flow.

**3.** The method according to claim 9, wherein the method comprises based on the diagnosis, adding a new learning signaling flow into the database (209), the new learning signaling flow being indicative of a new attack type or a normal signaling flow.

**4.** The method according to any one of claims 1 or 2, wherein the extracting comprises a first extraction step and a second extraction step, wherein the second extraction step comprises automatically extracting a second set of attributes based on the results of the first extraction step and obtaining the second set of attributes based on correlation measures between the received new signaling flow and signaling flows preceding the received new signaling flow.

**5.** The method according to any of the preceding claims, wherein the classification model is built based on data mining approach and the data mining is based on at least one of the following techniques: neural networks, *K* nearest neighbors, *K* being a positive integer, Bayesian networks, naïve Bayes trees, decision trees.

**6.** A computer program product comprising instructions for implementing the steps of a method according to any one of claims 1-12 when loaded and run on computer means of the communication device (102).

**7.** A device (102) for detecting anomalies in signaling flows, the device (102) being connected to a database (209), the device (102) being **characterized in that** it comprises:
- a receiver for receiving labeled learning signaling flows and for feeding these flows to the database (209), the signaling flows being labeled either to normal signaling flows or to different signaling flows indicative
